# EUROPÄISCHE PATENTSCHRIFT

(11) **EP 1 420 915 B1**
(45) Veröffentlichungstag und Bekanntmachung des Hinweises auf die Patenterteilung: **19.07.2006**
(21) Anmeldenummer: 02767373.0
(22) Anmeldetag: 13.08.2002
(51) Int. Cl.: B23B 51/06, B23B 51/04

(54) **STABFÖRMIGES WERKZEUG ZUR SPANENDEN BEARBEITUNG EINES WERKSTÜCKS**
ROD-SHAPED TOOL FOR MACHINING A WORKPIECE
OUTIL EN FORME DE BARRE SERVANT A L'USINAGE DE PIECES

(30) Priorität: 29.08.2001 DE 10142265
(43) Veröffentlichungstag der Anmeldung: 26.05.2004
(73) Patentinhaber: Friedrichs, Arno, 95336 Mainleus (DE)
(72) Erfinder: Friedrichs, Arno, 95336 Mainleus (DE)
(74) Vertreter: Kinnstätter, Klaus
(86) Internationale Anmeldenummer: PCT/EP2002/009038
(87) Internationale Veröffentlichungsnummer: WO 2003/020462

(56) Entgegenhaltungen:
- GB-A- 571 403
- US-A- 2 903 921
- US-A- 4 826 364

## Beschreibung

Die vorliegende Erfindung betrifft ein stabförmiges Werkzeug aus gesintertem Material zur spanenden Bearbeitung eines Werkstücks, z. B. einen Bohrer-, Fräser- oder Reibahlenstab, mit einer Stabmittenachse, einem Schaftbereich und einem in Richtung der Stabmittenachse an den Schaftbereich angrenzenden Spankammerbereich, wobei das Werkzeug im Spankammerbereich mindestens eine außenseitige, um die Stabmittenachse umlaufende Spankammer und im Schaftbereich keine Spankammer aufweist, wobei die Spankammer einen Minimalabstand von der Stabmittenachse aufweist.

Derartige Werkzeuge sind allgemein bekannt (Siehe z.B. US-A-4 826 364). Jeder handelsübliche Metallbohrer ist derart ausgebildet.

Aus der DE 199 42 966 Al ist ferner bekannt, in ein gattungsgemäßes Werkzeug exzentrisch angeordnete Kanäle einzubringen, die zusammen mit den Spankammern wendelförmig um die Stabmittenachse umlaufen und der Zufuhr von Kühl- oder Schmiermittel zur Werkzeugspitze dienen.

Aus der DE 195 22 837 Al ist ein stabförmiges Werkzeug zur spanenden Bearbeitung eines Werkstücks bekannt, das eine Stabmittenachse, einen Schaftbereich und eine in Richtung der Stabmittenachse an den Schaftbereich angrenzenden Spankammerbereich aufweist. Im Spankammerbereich weist das Werkzeug zwei außenseitige, im wesentlichen axial verlaufende Spankammern auf, im Schaftbereich keine derartige Spankammer. Die Spankammern weisen einen Minimalabstand von der Stabmittenachse auf.

Aus dem DE 80 02 631 U1 ist ein stabförmiges Werkzeug zur mahlenden Bearbeitung eines zu bearbeitenden Materials bekannt, das eine Stabmittenachse, einen Schaftbereich und einen in Richtung der Stabmittenachse an den Schaftbereich angrenzenden Kammerbereich aufweist. Das Werkzeug weist im Kammerbereich außenseitige Kammern auf, die einen Minimalabstand von der Stabmittenachse aufweisen. Im Schaftbereich weist es keine derartigen Kammern auf. Das Werkzeug weist ferner eine Mittenausnehmung auf, die sich in Richtung der Stabmittenachse über den Schaftbereich und bis in den Kammerbereich hinein erstreckt, im Kammerbereich einen nicht kreisförmigen Querschnitt aufweist und im Kammerbereich von der Stabmittenachse einen Maximalabstand aufweist, der mindestens so groß wie der Minimalabstand ist.

Aus der GB-A-571 403 ist ein stabförmiges Werkzeug zur spanenden Bearbeitung eines Werkstücks bekannt, das eine Stabmittenachse, einen Schaftbereich und einen in Richtung der Stabmittenachse an den Schaftbereich angrenzenden Spankammerbereich aufweist. Im Spankammerbereich weist das Werkzeug mindestens eine außenseitig um die Stabmittenachse umlaufene Spankammer auf, im Schaftbereich nicht. Die Spankammer weist einen Minimalabstand von der Stabmittenachse auf. Das Werkzeug weist eine kreisförmige Mittenausnehmung auf, die sich in Richtung der Stabmittenachse über den Schaftbereich und bis in den Spankammerbereich hinein erstreckt. Der Maximalabstand der Mittenausnehmung von der Stabmittenachse ist somit kleiner als der Minimalabstand, den die Spankammer von der Stabmittenachse aufweist.

Aus der US-A-2,903,921 ist ein stabförmiges Werkzeug zur spanenden Bearbeitung eines Werkstücks bekannt, das eine Stabmittenachse, einen Schaftbereich und einen in Richtung der Stabmittenachse an den Schaftbereich angrenzenden Spankammerbereich aufweist, wobei das Werkzeug im Spankammerbereich zwei außenseitige, um die Stabmittenachse umlaufende Spankammern und im Schaftbereich keine derartigen Spankammern aufweist, wobei die Spankammern einen Minimalabstand von der Stabmittenachse aufweisen. Das Werkzeug weist zwei symmetrisch zur Stabmittenachse angeordnete Ausnehmungen auf, die voneinander getrennt sind, jeweils einen nicht kreisförmigen Querschnitt aufweisen und von der Stabmittenachse einen Maximalabstand aufweisen, der größer als der Minimalabstand der Spankammern von der Stabmittenachse ist.

Aus der US-A-4,826,364 ist ein Offenbarungsgehalt zu entnehmen, der mit dem der DE 199 42 966 A1 vergleichbar ist.

Die Aufgabe der vorliegenden Erfindung besteht darin, ein gattungsgemäßes Werkzeug derart weiterzubilden, dass es bei gleicher Leistungsfähigkeit mit verringertem Materialeinsatz herstellbar ist.

Die Aufgabe wird dadurch gelöst, dass das Werkzeug eine im Bereich der Stabmittenachse materialfreie, geschlossene Mittenausnehmung aufweist, die sich in Richtung der Stabmittenachse über den Schaftbereich und bis in den Spankammerbereich hinein erstreckt, im Spankammerbereich einen nicht kreisförmigen Querschnitt aufweist und im Spankammerbereich von der Stabmittenachse einen Maximalabstand aufweist, der mindestens so groß wie der Minimalabstand ist.

Denn dadurch ist das Werkzeug sowohl im Schaft- als auch im Spankammerbereich nicht massiv, sondern hohl ausgebildet. Dennoch ist eine hinreichende Stabilität und Belastbarkeit des Werkzeugs gegeben.

Wenn der Maximalabstand im Schaftbereich mindestens so groß wie der Minimalabstand, vorzugsweise sogar größer als der Minimalabstand ist, ergibt sich eine besonders große Materialersparnis. Dies gilt ganz besonders dann, wenn der Schaftbereich einen Schaftaußendurchmesser aufweist und der Maximalabstand mindestens das 0,2-fache des Schaftaußendurchmessers beträgt. Um die Leistungsfähigkeit des Werkzeugs nicht zu beeinträchtigen, sollte aber der Maximalabstand maximal das 0,45-fache des Schaftaußendurchmessers betragen.

Wenn der Querschnitt der Mittenausnehmung im Spankammerbereich an einen Außenquerschnitt des Spankammerbereichs angepasst ist, so dass der Spankammerbereich im wesentlichen überall eine gleichbleibende Materialstärke aufweist, ergibt sich eine Optimierung der Materialeinsparung.

In einem Teilabschnitt des Spankammerbereichs kann mindestens ein bezüglich der Stabmittenachse exzentrisch angeordneter Führungskanal für ein Kühl- oder Schmiermedium verlaufen, der mit der Mittenausnehmung kommunizierend verbunden ist.

Die Mittenausnehmung kann im Schaftbereich wahlweise einen kreisförmigen oder einen nicht kreisförmigen Querschnitt aufweisen. Im letzteren Fall kann der Querschnitt beispielsweise oval, elliptisch oder polygonförmig sein bzw. mindestens eine Ausnehmung oder mindestens einen Vorsprung aufweisen. Durch einen nicht kreisförmigen Querschnitt ist dabei eine besonderes gute Kraftübertragung durch einen in die Mittenausnehmung eingeführten Mitnehmer möglich.

Wenn die Mittenausnehmung im Schaftbereich in einem dem Spankammerbereich zugewandten Teilabschnitt einen größeren Querschnitt aufweist als an ihrem vom Spankammerbereich abgewandten Ende, ist das Werkzeug besonders einfach mit einem Werkzeughalter verspannbar. Die Mittenausnehmung kann hierzu leicht konisch verlaufen und/oder in ihrem dem Spankammerbereich zugewandten Teilabschnitt hammerkopfartig oder schwalbenschwanzförmig ausgebildet sein.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- Figur 1: einen Bohrer im Profil,
- Figuren 2 - 4: Schnitte durch den Bohrer von Figur 1 entlang Linien II-II, III-III bzw. IV-IV,
- Figur 5: einen weiteren Bohrer im Profil,
- Figur 6 - 8: Schnitte durch den Schaftbereich eines weiteren Bohrers,
- Figur 9: einen dritten Bohrer im Profil und
- Figuren 10 - 12: Schnitte durch den Bohrer von Figur 9 entlang Linien X-X, XI-XI bzw. XII-XII.

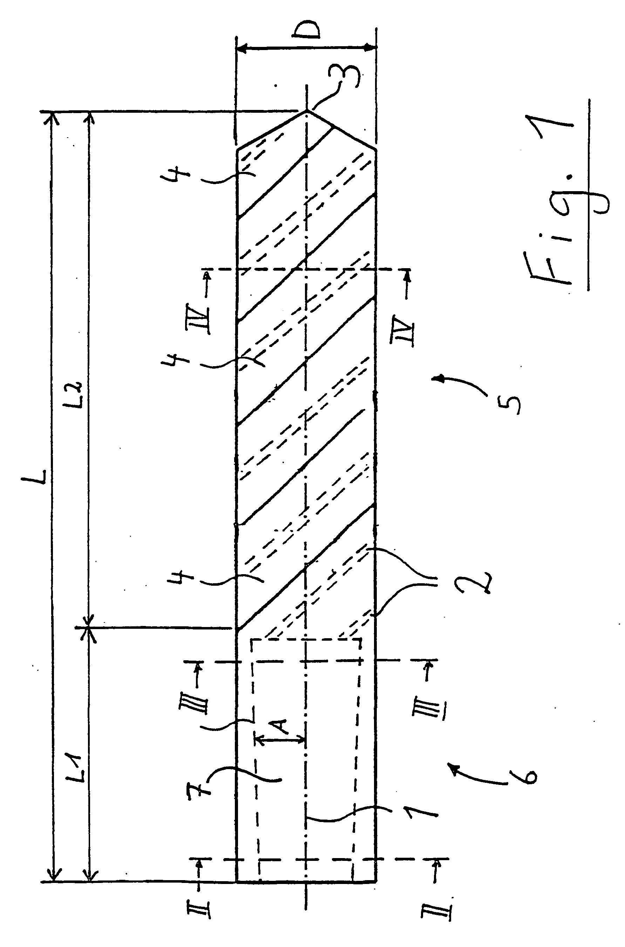

In Figur 1 ist beispielhaft für ein stabförmiges Werkzeug zur spanenden Bearbeitung eines Werkstücks ein Bohrerstab dargestellt. Die vorliegende Erfindung umfasst aber auch andere Werkzeuge als Bohrerstäbe. Beispielhaft seien Fräserstäbe und Reibahlenstäbe genannt.

Der Bohrerstab besteht aus gesintertem Material, z. B. aus Stahlpulver, Hartmetall oder Keramik. Zum Herstellen des Bohrerstabs wird z. B. zunächst pastöses Sintermaterial extrudiert. Beim Extrudieren werden exzentrisch zu einer Stabmittenachse 1 Führungskanäle 2 in den Stab eingebracht. Die Führungskanäle 2 dienen beim späteren Betrieb des Bohrerstabs der Zuführung eines Kühl- oder eines Schmiermittels zu einer Bohrerspitze 3.

Während oder nach dem Extrudieren wird der hergestellte Stab verdrallt. Die Führungskanäle 2 laufen danach wendelförmig um die Stabmittenachse 1 um. Bevorzugt erfolgt das Verdrallen dabei nach dem Ablängen des extrudierten Stabs.

In den Sinterstab werden ferner - vorzugsweise vor dem Sintern, in jedem Fall aber nach dem Stabilisieren des Sintermaterials, z. B. nach dem Trocknen oder Vorsintern des Sintermaterials - außenseitige Spankammern 4 eingebracht. Auch sie laufen wendelförmig um die Stabmittenachse 1 um.

Die Spankammern 4 definieren einen Spankammerbereich 5. Das von der Bohrerspitze 3 abgewandte Ende der Spankammern 4 stellt den Übergang zu einem Schaftbereich 6 dar. Der Schaftbereich 6 weist keine Spankammern 4 auf. Er erstreckt sich bis zu dem von der Bohrerspitze 3 abgewandten Ende des Bohrerstabes. Der Spankammerbereich 5 und der Schaftbereich 6 grenzen also in Richtung der Stabmittenachse 1 unmittelbar aneinander an.

Der Schaftbereich 6 erstreckt sich über eine Schaftlänge L1, der Spankammerbereich 5 über eine Schneidenlänge L2. Der Bohrerstab weist somit eine Gesamtlänge L auf, die der Summe von Schaftlänge L1 und Schneidenlänge L2 entspricht. Das Verhältnis von Schaftlänge L1 zu Gesamtlänge L ist (trivialerweise) kleiner als 1. Meist liegt es zwischen 0,25 und 0,66, in der Regel zwischen 0,33 und 0,50.

Der Bohrerstab weist einen einheitlichen Außendurchmesser D auf. Die Spankammern 4 erstrecken sich vom Außendurchmesser D ein Stück zur Stabmittenachse 1 hin. Sie weisen aber einen Minimalabstand a von der Stabmittenachse 1 auf. Der Minimalabstand a beträgt in der Regel mindestens das 0,2-fache des Außendurchmessers D des Bohrerstabs.

Der Schaftbereich 6 weist eine Mittenausnehmung 7 auf, die sich in Richtung der Stabmittenachse 1 erstreckt und im Schaftbereich 6 einen Maximalabstand A von der Stabmittenachse 1 aufweist. Der Maximalabstand A ist gemäß den Figuren 1 bis 3 größer als der Minimalabstand a. Er ist also insbesondere mindestens so groß wie der Minimalabstand a und auch mindestens so groß wie das 0,8-fache des Minimalabstands a. Die Mittenausnehmung 7 wird vorzugsweise in den formstabilisierten, noch nicht gesinterten Sinterstab eingebracht. Die Mittenausnehmung 7 kann z. B. als Bohrung ausgebildet sein.

Aufgrund des Entfernens des Sintermaterials aus dem Schaftbereich 6 vor dem Sintern des Sinterstabes kann daher das entfernte Material wieder mit Bindemittel vermischt und erneut dem Herstellungsprozess zugeführt werden.

Aufgrund der relativen Abmessungsverhältnisse beträgt der Maximalabstand A typischerweise 25 bis 40 % des Außendurchmessers D. 20 % des Außendurchmessers D sollten aber nicht unterschritten, 45 % nicht überschritten werden.

Die Führungskanäle 2 und die Mittenausnehmung 7 sind miteinander kommunizierend verbunden. Dies wird dadurch erreicht, dass die Exzentrizität der Führungskanäle 7 maximal so groß wie der Maximalabstand A ist.

Gemäß den Figuren 2 und 3 weist die Mittenausnehmung 7 im Schaftbereich 6 einen kreisförmigen Querschnitt auf. Der Querschnitt nimmt von dem der Bohrerspitze 3 abgewandten Ende des Schaftbereichs 6 zum Spankammerbereich 5 hin zu. Die Mittenausnehmung 7 verläuft also leicht konisch. Dadurch ist es möglich, dass ein Mitnehmer für den Bohrerstab nicht außen am Bohrerstab angreift (wie üblich), sondern in die Mittenausnehmung 7 eingeführt und in dieser mit dem Schaftbereich 6 verspannt ist.

Der Bohrerstab gemäß Figur 5 entspricht im wesentlichen dem Bohrerstab gemäß den Figuren 1 bis 4. Insbesondere weist die Mittenausnehmung 7 auch beim Bohrerstab gemäß Figur 5 im Schaftbereich 6 in einem dem Spankammerbereich 5 zugewandten Teilabschnitt 8 einen größeren Querschnitt auf als an ihrem vom Spankammerbereich 5 abgewandten Ende. Bei dem Bohrerstab gemäß Figur 5 ist die Mittenausnehmung 7 aber in dem Teilabschnitt 8 hammerkopfartig oder schwalbenschwanzförmig ausgebildet. Im übrigen Bereich ist sie zylindrisch ausgebildet. Gegebenenfalls könnte die Mittenausnehmung 7 aber im übrigen Teilabschnitt ebenfalls leicht konisch verlaufen.

In den Figuren 6 bis 8 sind weitere mögliche Querschnitte der Mittenausnehmung 7 dargestellt, die nach Belieben bei den Bohrerstäben gemäß den Figuren 1 bis 5 zum Einsatz kommen könnten. Allen diesen Bohrerstäben ist gemeinsam, dass die Mittenausnehmung 7 im Schaftbereich 6 einen nicht kreisförmigen Querschnitt aufweist. Ferner ist ihnen gemeinsam, dass die Führungskanäle 2 und die Mittenausnehmung 7 miteinander kommunizierend verbunden sind.

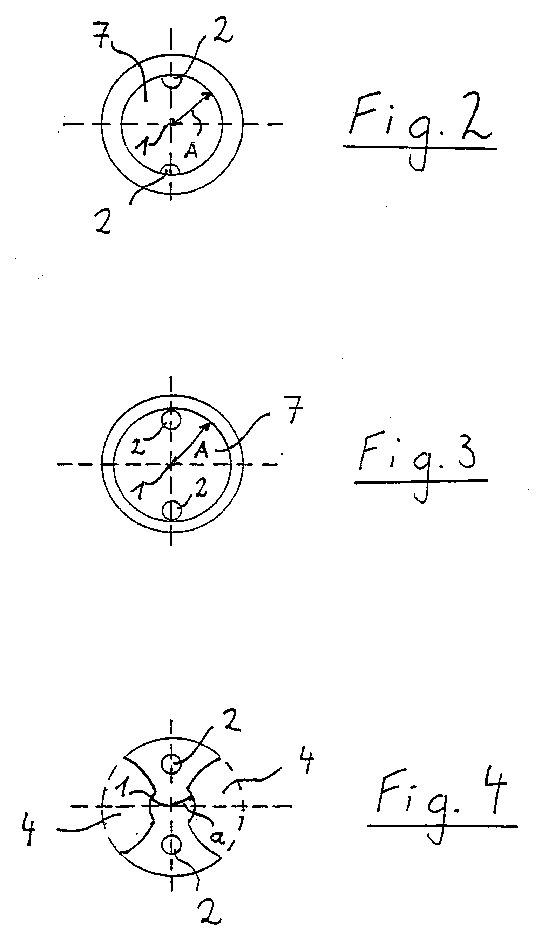

Gemäß Figur 6 ist der Querschnitt im Schaftbereich 6 oval oder elliptisch ausgebildet. Gemäß Figur 7 ist der Querschnitt im Schaftbereich 6 polygonförmig. Gemäß Figur 8 weist der Querschnitt eine Ausnehmung 9 und - beispielhaft der Ausnehmung 9 gegenüber liegend - einen Vorsprung 10 auf. Gegebenenfalls könnten auch mehr als eine Ausnehmung 9 und/oder mehr als ein Vorsprung 10 vorhanden sein. Gegebenenfalls könnte auch die Ausführungsform gemäß Figur 8 mit einer der Ausführungsformen gemäß den Figuren 6 und 7 kombiniert werden.

Der Bohrerstab gemäß den Figuren 5 bis 8 weist keine Führungskanäle 2 auf. Er könnte aber auch solche Kanäle 2 aufweisen. Ebenso könnten beim Bohrerstab gemäß den Figuren 1 bis 4 die Führungskanäle 2 gegebenenfalls entfallen.

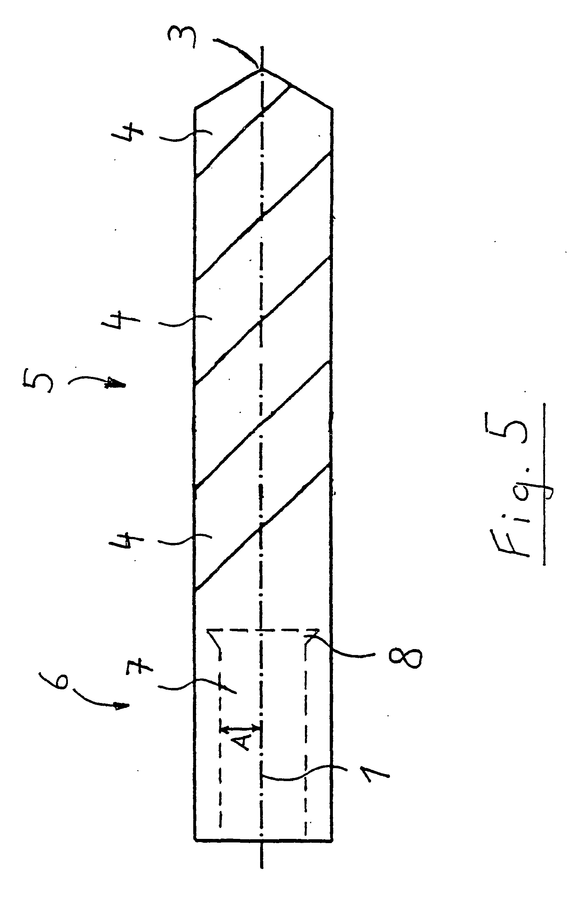

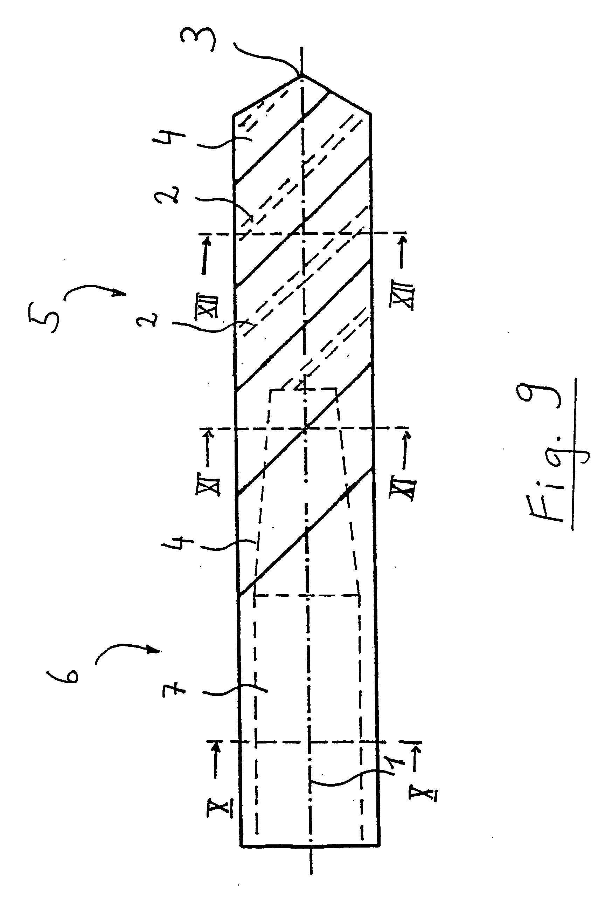

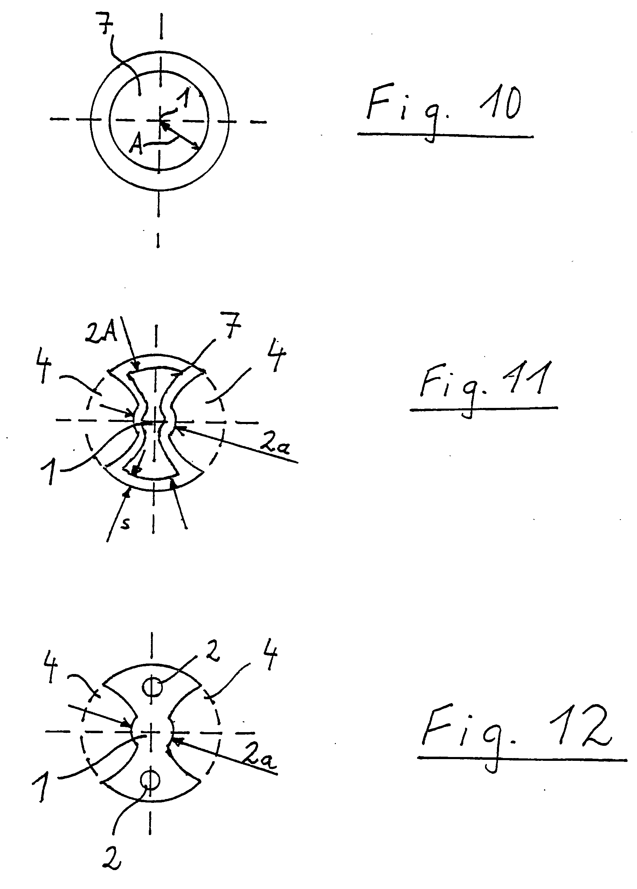

In den Figuren 9 bis 12 ist nun ein weiterer Bohrerstab dargestellt, der auf eine andere Herstellungsweise als die Bohrerstäbe gemäß den Figuren 1 bis 8 herstellbar ist. Bei diesem Bohrerstab wird fließfähiges Sintermaterial auf einen Formling aufgebracht. Das Sintermaterial kann z. B. pastös sein. Der Formling kann z. B. aus Metall, Keramik, Kunststoff oder einem leicht schmelzbaren Material (typischerweise Wachs) bestehen. Danach wird das aufgebrachte Sintermaterial getrocknet oder auf andere Weise formstabilisiert, z. B. durch Vorsintern. Sodann wird der Formling - gegebenenfalls unter Relativdrehung gegen das formstabilisierte Sintermaterial um die Stabmittenachse 1 - aus dem formstabilisierten Sinterstab herausgezogen oder - im Falle eines schmelzbaren Materials - ausgeschmolzen. Die Spankammern 4 können alternativ vor oder nach dem Ausziehen bzw. Ausschmelzen des Formlings, gegebenenfalls auch nach dem Sintern des Sinterstabs, in diesen eingebracht werden. Auch bei dem Bohrerstab gemäß Figur 9 laufen die Spankammern 4 wendelartig um die Stabmittenachse 1 um. Auch die Mittenausnehmung 7 läuft - zumindest im Spankammerbereich 5 - wendelartig um die Stabmittenachse 1 herum.

Bei diesem Bohrerstab ist die Ausgestaltung der Mittenausnehmung 7 (und in der Regel auch der Führungskanäle 2) wesentlich durch die Gestalt des Formlings bestimmt. Dadurch ist es möglich, dass die Mittenausnehmung 7 sich über den Schaftbereich 6 hinaus in Richtung der Stabmittenachse 1 bis in den Spankammerbereich 5 hinein erstreckt. Aufgrund des nicht kreisförmigen Querschnitts ist es dabei möglich, dass der Maximalabstand A auch im Spankammerbereich 5 mindestens so groß wie der Minimalabstand a ist. Er kann sogar auch im Spankammerbereich 5 größer als der Minimalabstand a sein.

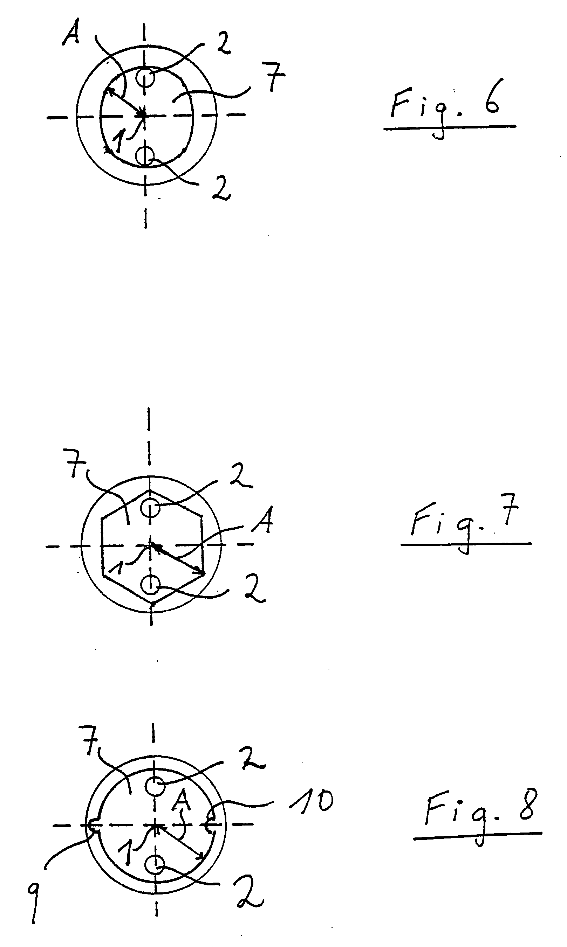

Gemäß den Figuren 10 bis 12 verjüngt sich die Mittenausnehmung 7 zur Bohrerspitze 3 hin und geht allmählich in die Führungskanäle 2 über. Die Mittenausnehmung 7 reicht dabei so weit, wie der Bohrerstab im Bereich der Stabmittenachse 1 materialfrei gehalten ist. In dem Bereich, in dem die Mittenausnehmung 7 im Spankammerbereich 5 noch vorhanden ist, ist der Querschnitt der Mittenausnehmung 7 an einen Außenquerschnitt des Spankammerbereichs 5 derart angepasst, dass der Spankammerbereich 5 im wesentlichen überall eine gleichbleibende Materialstärke s aufweist.

Bei der Ausführungsform gemäß den Figuren 9 bis 12 ist die Mittenausnehmung 7 im Schaftbereich 6 im wesentlichen zylindrisch ausgebildet. Die Mittenausnehmung 7 könnte aber auch einen nicht kreisförmigen Querschnitt aufweisen. Ebenso könnten sie im Schaftbereich 6 in einem dem Schneidenbereich 5 zugewandten Teilabschnitt einen größeren Querschnitt aufweisen als an ihrem vom Spankammerbereich 5 abgewandten Ende. Hierzu muss der Formling entsprechend vorgeformt und ausschmelzbar sein. Alternativ oder zusätzlich kann nach dem. Entfernen des Formlings aus dem formstabilisierten Sintermaterial auch eine Nachbearbeitung der Mittenausnehmung 7 erfolgen.

Die Führungskanäle 2 werden, wie bereits erwähnt, durch die Gestalt des Formlings bestimmt. Im Bereich der Bohrerspitze 3 können die Führungskanäle 2 gegebenenfalls aber auch nachträglich, z. B. durch Nachbohren, in den Bohrerstab eingebracht werden.

Mit dem erfindungsgemäßen Bohrerstab - bzw. allgemeiner dem erfindungsgemäßen Werkzeug zur spanenden Bearbeitung eines Werkstücks - lässt sich gegenüber herkömmlichen Werkzeugen eine erhebliche Material- und Gewichtsersparnis erzielen. Ferner ist es auf einfachere Weise möglich, eine kompakte Halterung für das Werkzeug in Betrieb vorzusehen. Durch den größeren Querschnitt der Mittenausnehmung 7 ergibt sich ferner ein erheblich verringerter Fließwiderstand für das Kühl- bzw. Schmiermedium. Trotz der teilweise hohlen Ausbildung des Bohrerstabs ist dessen Belastbarkeit und Leistungsfähigkeit aber im wesentlichen nicht verringert.

## Patentansprüche

1. Stabförmiges Werkzeug aus gesintertem Material zur spanenden Bearbeitung eines Werkstücks, z. B. Bohrer-, Fräser- oder Reibahlenstab, mit einer Stabmittenachse (1), einem Schaftbereich (6) und einem in Richtung der Stabmittenachse (1) an den Schaftbereich (6) angrenzenden Spankammerbereich (5), wobei das Werkzeug im Spankammerbereich (5) mindestens eine außenseitige, um die Stabmittenachse (1) umlaufende Spankammer (4) und im Schaftbereich (6) keine Spankammer (4) aufweist, wobei die Spankammer (4) einen Minimalabstand (a) von der Stabmittenachse (1) aufweist,
**dadurch gekennzeichnet,**
**dass** das Werkzeug eine im Bereich der Stabmittenachse (1) materialfreie, geschlossene Mittenausnehmung (7) aufweist, die sich in Richtung der Stabmittenachse (1) über den Schaftbereich (6) und bis in den Spankammerbereich (5) hinein erstreckt, im Spankammerbereich (5) einen nicht kreisförmigen-Querschnitt aufweist und im Spankammerbereich (5) von der Stabmittenachse (1) einen Maximalabstand (A) aufweist, der mindestens so groß wie der Minimalabstand (a) ist.

2. Werkzeug nach Anspruch 1,
**dadurch gekennzeichnet,**
**dass** der Maximalabstand (A) im Schaftbereich (6) größer als der Minimalabstand (a) ist.

3. Werkzeug nach Anspruch 1 oder 2,
**dadurch gekennzeichnet,**
**dass** der Schaftbereich (6) einen Schaftaußendurchmesser (D) aufweist und dass der Maximalabstand (A) im Schaftbereich (6) mindestens das 0,2-fache des Schaftaußendurchmessers (D) beträgt.

4. Werkzeug nach Anspruch 3,
**dadurch gekennzeichnet,**
**dass** der Maximalabstand (A) im Schaftbereich maximal das 0,45-fache des Schaftaußendurchmessers (D) beträgt.

5. Werkzeug nach einem der obigen Ansprüche,
**dadurch gekennzeichnet,**
**dass** der Maximalabstand (A) im Spankammerbereich (5) größer als der Minimalabstand (a) ist.

6. Werkzeug nach einem der obigen Ansprüche,
**dadurch gekennzeichnet,**
**dass** der Querschnitt der Mittenausnehmung (7) im Spankammerbereich (5) an einen Außenquerschnitt des Spankammerbereichs (5) angepasst ist, so dass der Spankammerbereich (5) im wesentlichen überall eine gleichbleibende Materialstärke (s) aufweist.

7. Werkzeug nach einem der obigen Ansprüche,
**dadurch gekennzeichnet,**
**dass** die Mittenausnehmung (7) im Spankammerbereich (5) wendelförmig um die Stabmittenachse (1) umläuft.

8. Werkzeug nach einem der obigen Ansprüche,
**dadurch gekennzeichnet,**
**dass** in einem Teilabschnitt des Spankammerbereichs (5) mindestens ein bezüglich der Stabmittenachse (1) exzentrisch angeordneter Führungskanal (2) für ein Kühl- oder Schmiermedium verläuft, der mit der Mittenausnehmung (7) kommunizierend verbunden ist.

9. Werkzeug nach.einem der Ansprüche 1 bis 8,
**dadurch gekennzeichnet,**
**dass** die Mittenausnehmung (7) im Schaftbereich (6) einen kreisförmigen Querschnitt aufweist.

10. Werkzeug nach einem der Ansprüche 1 bis 8,
**dadurch gekennzeichnet,**
**dass** die Mittenausnehmung (7) im Schaftbereich (6) einen nicht kreisförmigen Querschnitt aufweist.

11. Werkzeug nach Anspruch 10,
**dadurch gekennzeichnet,**
**dass** der Querschnitt im Schaftbereich (6) oval, elliptisch oder polygonförmig ist oder mindestens eine Ausnehmung oder mindestens einen Vorsprung aufweist.

12. Werkzeug nach einem der obigen Ansprüche,
**dadurch gekennzeichnet,**
**dass** die Mittenausnehmung (7) im Schaftbereich (6) in einem dem Spankammerbereich (5) zugewandten Teilabschnitt einen größeren Querschnitt aufweist als an ihrem vom Spankammerbereich (5) abgewandten Ende.

13. Werkzeug nach Anspruch 12,
**dadurch gekennzeichnet,**
**dass** die Mittenausnehmung (7) leicht konisch verläuft.

14. Werkzeug nach Anspruch 12 oder 13,
**dadurch gekennzeichnet,**
**dass** die Mittenausnehmung (7) in ihrem dem Spankammerbereich (5) zugewandten Teilabschnitt (8) hammerkopfartig oder schwalbenschwanzförmig ausgebildet ist.

## Claims

1. Rod-shaped tool of sintered material for machining a workpiece, for example a drilling, milling or reaming rod, with a rod centre axis (1), a shank region (6) and a chip chamber region (5) adjoining the shank region (6) in the direction of the rod centre axis (1), wherein the tool has, in the chip chamber region (5), at least one chip chamber (4) at the outer side and encircling the rod centre axis (1) and, in the shank region (6), no chip chamber (4), wherein the chip chamber (4) has a minimum spacing (a) from the rod centre axis (1), **characterised in that** the tool has a closed centre recess (7) which is material-free in the region of the rod centre axis (1), extends over the shank region (6) and as far as into the chip chamber region (5), has a non-circular cross-section in the chip chamber region (5) and, in the chip chamber region (5), has a maximum spacing (A) from the rod centre axis (1) which is at least as large as the minimum spacing (a).

2. Tool according to claim 1, **characterised in that** the minimum spacing (A) in the shank region (6) is greater than the minimum spacing (a).

3. Tool according to claim 1 or 2, **characterised in that** the shank region (6) has a shank outer diameter (D) and that the maximum spacing (A) in the shank region (6) amounts to at least 0.2 times the shank outer diameter (D).

4. Tool according to claim 3, **characterised in that** the maximum spacing (A) in the shank region amounts to at most 0.45 times the shank outer diameter (D).

5. Tool according to one of the above claims, **characterised in that** the maximum spacing (A) in the chip chamber region (5) is greater than the minimum spacing (a).

6. Tool according to one of the above claims, **characterised in that** the cross-section of the centre recess (7) in the chip chamber region (5) is matched to the outer cross-section of the chip chamber region (5) so that the chip chamber region (5) overall has a substantially uniform material thickness (s).

7. Tool according to one of the above claims, **characterised in that** the centre recess (7) extends substantially helically around the rod centre axis (1).

8. Tool according to one of the above claims, **characterised in that** at least one guide channel (2), which is arranged eccentrically with respect to the rod centre axis (1) and which is connected in communicating manner with the centre recess (7), for a coolant or lubricant extends in a part section of the chip chamber region (5).

9. Tool according to one of claims 1 to 8, **characterised in that** the centre recess (7) in the shank region (6) has a circular cross-section.

10. Tool according to one of claims 1 to 8, **characterised in that** the centre recess (7) in the shank region (6) has a non-circular cross-section.

11. Tool according to claim 10, **characterised in that** the cross-section in the shank region (6) is oval, elliptical or polygonal or has at least one recess or at least one projection.

12. Tool according to one of the above claims, **characterised in that** the centre recess (7) in the shank region (6) has a cross-section which is greater in a part section facing the chip chamber region (5) than at its end remote from the chip chamber region (5).

13. Tool according to claim 12, **characterised in that** the centre recess (7) has a slight conicity.

14. Tool according to claim 12 or 13, **characterised in that** the centre recess (7) is formed to be hammerhead-like or dovetail-shaped in its part section (8) facing the chip chamber region (5).

## Revendications

1. Outil en forme de barre en matériau fritté servant à l'usinage de serrage de pièces, par exemple une barre de fleuret, de fraise ou d'alésoir, pourvu d'un axe de milieu de barre (1), d'une zone de queue (6), et d'une zone de chambre de serrage (5) se situant à la limite la zone de queue (6) en direction de l'axe du milieu de barre (1), l'outil étant pourvu d'au moins une chambre de serrage extérieure (4) entourant l'axe de milieu de barre (1) dans la zone de chambre de serrage (5), et n'étant pas pourvu d'une chambre de serrage (4) dans la zone de queue (6), la chambre de serrage (4) présentant un intervalle minimal (a) par rapport à l'axe de milieu de barre (1), **caractérisé en ce que** l'outil est pourvu d'un creux de milieu (7) fermé et dépourvu de matériau dans la zone de l'axe de milieu de barre (1), lequel s'étend en direction de l'axe de milieu de barre (1) à travers la zone de queue (6) jusqu'à l'intérieur de la zone de chambre de serrage (5), et présente une section transversale non circulaire dans la zone de chambre de serrage (5), et un intervalle maximal (A) par rapport à l'axe de milieu de barre (1) dans la zone de chambre de serrage (5), lequel est au moins de la même dimension que l'intervalle minimal (a).

2. Outil selon la revendication 1, **caractérisé en ce que** l'intervalle maximal (A) est plus grand que l'intervalle minimal (a) dans la zone de queue (6).

3. Outil selon la revendication 1 ou 2, **caractérisé en ce que** la zone de queue (6) présente un diamètre extérieur de queue (D) et que l'intervalle maximal (A) comprend au moins 0,2 fois le diamètre extérieur de queue (D) dans la zone de queue (6).

4. Outil selon la revendication 3, **caractérisé en ce que** l'intervalle maximal (A) comprend 0,45 fois maximum le diamètre extérieur de queue (D) dans la zone de queue.

5. Outil selon l'une quelconque des revendications précédentes, **caractérisé en ce que** l'intervalle maximal (A) est plus grand que l'intervalle minimal (a) dans la zone de chambre de serrage (5).

6. Outil selon l'une quelconque des revendications précédentes, **caractérisé en ce que** la section transversale du creux de milieu (7) est adaptée à une section transversale extérieure de la zone de chambre de serrage (5) dans la zone de chambre de serrage (5), de sorte que la zone de chambre de serrage (5) présente une rigidité de matériau (s) restant au même niveau essentiellement partout.

7. Outil selon l'une quelconque des revendications précédentes, **caractérisé en ce que** le creux de milieu (7) entoure l'axe de milieu de barre de manière hélicoïdale dans la zone de chambre de serrage (5).

8. Outil selon l'une quelconque des revendications précédentes, **caractérisé en ce que**, dans une section de la zone de chambre de serrage (5), au moins un canal de guidage (2), agencé de manière excentrique par rapport à l'axe de milieu de barre (1), est relié de façon à communiquer avec un creux de milieu (7) en vue d'un support de graissage ou de refroidissement.

9. Outil selon l'une quelconque des revendications 1 à 8, **caractérisé en ce que** le creux de milieu (7) présente une section transversale circulaire dans la zone de queue (6).

10. Outil selon l'une quelconque des revendications 1 à 8, **caractérisé en ce que** le creux de milieu (7) présente une section transversale non circulaire dans la zone de queue (6).

11. Outil selon la revendication 10, **caractérisé en ce que** la section transversale, dans la zone de queue (6), est de forme ovale, elliptique ou de la forme d'un polygone et est pourvue au moins d'un creux ou au moins d'un épaulement.

12. Outil selon l'une quelconque des revendications précédentes, **caractérisé en ce que** le creux de milieu (7) présente une section transversale plus grande, dans une section orientée vers la zone de chambre de serrage (5) dans la zone de queue (6), qu'au niveau de l'extrémité de celui-ci, opposée à la zone de chambre de serrage (5).

13. Outil selon la revendication 12, **caractérisé en ce que** le creux de milieu (7) s'étend sous forme légèrement conique.

14. Outil selon la revendication 12 ou 13, **caractérisé en ce que** le creux de milieu (7) est agencé à la manière d'une tête de marteau ou d'une queue d'aronde dans la section transversale de celui-ci, orientée vers la zone de chambre de serrage (5).
